# FASCICULE DE BREVET EUROPEEN

(11) **EP 1 632 434 B1**
(45) Date de publication et mention de la délivrance du brevet: **31.10.2007**
(21) Numéro de dépôt: 05300702.7
(22) Date de dépôt: 30.08.2005
(51) Int. Cl.: B65D 19/40, B65D 19/34

(54) **Palette de manutention, mixte, à éléments recyclables et réutilisables**
Transportpalette, gemischt, mit recyclebaren und wiederverwendbaren Elemente
Handling pallet, mixed, with recyclable and reusable elements

(30) Priorité: 01.09.2004 FR 0451952
(43) Date de publication de la demande: 08.03.2006
(73) Titulaire: Papeteries et Cartonneries Lacaux Freres SA, 87000 Limoges (FR)
(72) Inventeur: Morange, Christian, 87170, ISLE (FR)
(74) Mandataire: Fantin, Laurent

(56) Documents cités:
- CH-A- 492 611
- FR-A- 1 247 478
- US-A- 2 444 184
- US-A- 2 741 361
- US-A- 2 841 350
- US-A- 4 378 743

## Description

La présente invention concerne une palette de manutention, mixte, à éléments recyclables et réutilisables.

On connaît les palettes réalisées en bois qui comprennent une surface de réception des produits, constituée de lames de bois juxtaposées sur un cadre comportant des pieds généralement munis également de lames permettant de les lier entre eux.

Ces pieds ménagent des espaces longitudinaux sous la surface de réception pour permettre le passage des fourches d'un élévateur lors des manutentions.

Bien que difficilement recyclables, ces palettes sont tout à fait adaptées mais elles sont d'un coût élevé en terme de production, de gestion et de destruction.

De plus, leur poids est élevé, leur manutention est pénible et comporte des risques au niveau de l'assemblage avec l'utilisation de clous et agrafes.

Il existe deux types de palettes bois :
- celles qui sont à usage unique et qui sont ensuite non pas recyclées mais détruites, les fibres pouvant être éventuellement valorisées mais avec des rendements très faibles, et
- celles qui sont réutilisables, souvent peintes, fabriquées avec des lames de bois de qualité, nécessitant alors une consigne et des transferts retour de palettes ce qui conduit à des prix prohibitifs, un tel système étant en voie de disparition.

Aussi, il existe sur le marché des palettes un besoin de palettes à usage unique, recyclables sur le lieu de déchargement ou au moins à proximité, sans nécessiter un retour de palettes vides sur de grandes distances, d'un prix de revient bas compétitif pour les rendre attractives et pour répondre aux besoins des utilisateurs.

On entend par recyclage, une réelle valorisation d'au moins une partie de la palette et une réutilisation pour une autre part.

De telles palettes recyclables doivent aussi pouvoir être fabriquées industriellement mais aussi recyclées industriellement, sans faire appel à une forte main d'oeuvre.

On connaît aussi des palettes réalisées tout en carton, du type carton ondulé.

De telles palettes sont entièrement recyclables mais elles présentent des inconvénients par leurs propriétés mécaniques restreintes.

En effet, les plots réalisés en carton peuvent reprendre généralement la charge reçue mais ils sont sujets à une dégradation très rapide lorsqu'ils sont mouillés, ce qui est souvent le cas des palettes qui reposent sur des sols extérieurs ou des sols intérieurs en atmosphère humide.

On constate aussi que pour des charges lourdes, il faut multiplier le nombre de plots car la résistance mécanique du carton trouve également des limites.

De plus, lors des manutentions avec les chariots élévateurs, les chocs et les mauvaises orientations des fourches peuvent aisément provoquer la destruction de ces plots. Dès lors, on sait aussi que les plots en carton étant construits et non monolithiques, la destruction partielle peut conduire à une inefficacité totale du plot dans sa fonction de reprise des efforts.

Il est aussi à prendre en compte la complexité de la fabrication des éléments en carton qui nécessitent de nombreux découpages, pliages, collages.

Un exemple de cet art antérieur de palette en carton est donné par les demandes de brevet français N° 2 672 269 ou N° 2 691 699, et le document CH-A-492 611.

Le but de la présente invention est d'associer les avantages du carton et ceux du bois ou d'une matière déjà recyclée pour réaliser une palette mixte qui répond aux besoins des utilisateurs.

La palette selon la présente invention est maintenant décrite en détail suivant un mode de réalisation particulier, non limitatif, en regard des dessins annexés qui représentent à travers les différentes figures :
- figure 1, une vue en perspective éclatée de la palette selon l'invention,
- figure 2, une vue de dessus du flan de la plaque inférieure permettant la réalisation de la palette, et
- figure 3, une vue de détail en coupe de la fixation d'un plot.

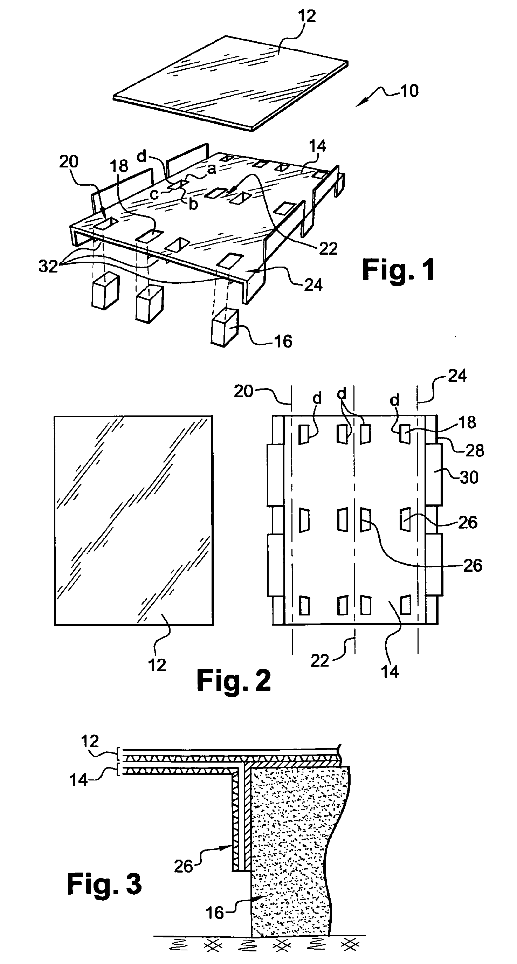

Sur la figure 1, on a représenté une palette 10 comprenant une plaque supérieure 12, une plaque inférieure 14 et des plots 16.

Les deux plaques sont réalisées à partir de carton ondulé.

Pour donner un ordre d'idée la plaque supérieure 12 est réalisée dans du carton ondulé haute résistance de 10 mm d'épaisseur, double cannelures et la plaque inférieure 14 est réalisée en carton ondulée de haute résistance de 5 mm, double cannelures également.

Comme montré sur la figure 1, la plaque supérieure 12 est monolithique et pleine.

Comme indique sur la figure 2, plus particulièrement, la plaque inférieure est monolithique et comporte des découpes 18 très simples n'induisant pas de chutes de carton. Ces découpes sont, dans l'exemple représenté, réparties en trois rangées 20, 22 et 24, parallèles.

On considère l'axe longitudinal de la palette comme étant parallèle à l'orientation des rangées.

La rangée centrale 22 comprend 3 paires de découpes et chaque rangée latérale 20, 24 comprend trois découpes 18.

Les découpes 18 ont une forme sensiblement rectangulaire. Ces découpes sont réalisées uniquement sur trois côtés a, b et c. Le côté d est une ligne de pliage, pliage éventuellement favorisé par un rainage.

Ces découpes 18 permettent de générer un volet 26.

Ces volets 26 ont des orientations différentes.

Les volets de la rangée centrale 22 ont leurs lignes d en regard en sorte, lorsque les volets 26 correspondants sont positionnés à 90°, de ménager un écart e, visible sur la figure 3.

Sur les bords longitudinaux de la plaque inférieure, il est prévu des découpes en sorte de ménager des rabats 28, analogues aux volets 26 et disposés en vis-à-vis des volets 26 des découpes 18 des rangées latérales 20 et 24 lorsqu'ils sont repliés à 90° vers le bas.

La découpe des rabats 28 génère simultanément des retours 30 de protection lorsqu'ils sont repliés vers le haut.

On dispose donc de trois rangées :
- un rangée centrale 22 comprenant trois logements 32 délimités par deux volets 26 parallèles, et
- deux rangées latérales 20, 24 comprenant chacune trois logements 32 délimités, côté intérieur, par les volets 26 et côté extérieur, par les rabats 28.

La plaque inférieure permet d'obtenir dans le mode de réalisation représenté neuf logements.

Ces logements sont destinés à recevoir chacun un plot 16.

Ces plots sont réalisés préférentiellement en bois. Le bois peut être du bois plein mais avantageusement et préférentiellement, il s'agit de bois aggloméré réalisé avec des résidus de bois associés à un liant polymère résistant à l'humidité et à l'eau.

Ces plots ont une forme parallélépipédique avec des angles chanfreinés, au moins les angles des côtés transversaux inférieurs.

Les plots 16 ont donc une largeur e, aux jeux près de montage, et sont rapportés chacun par collage de leur face supérieure contre la face inférieure de la plaque 12 supérieure et par collage des faces latérales longitudinales contre les volets 26 pour la rangée centrale 22 et contre les volets 26 et les rabats 28 pour les rangées latérales.

Pour donner un ordre d' idée des dimensions de ces plots, on indique une hauteur de 100 mm pour 140 mm de longueur et 80 mm de largeur.

On note que la hauteur du plot est supérieure à la largeur des volets afin qu'ils restent en partie haute du plot après collage, sans contact avec le sol. L'eau, l'humidité ne peuvent ainsi accéder au carton par migration capillaire.

La colle est également du type résistant à l'eau afin de garantir un collage résistant.

La plaque supérieure est également rapportée sur la plaque inférieure au moyen d'une colle résistant à l'eau.

Pour une réalisation industrielle, il convient de pouvoir utiliser des colles "hot melt" qui assurent une prise quasi-instantanée avec un fort pouvoir cohésif, y compris avec des matériaux différents. De plus, ces colles se déposent aisément par des pistolets adaptés et existants sur le marché.

La palette selon la présente invention est, en plus des avantages indiqués en préambule, d'une plus grande légèreté que les palettes bois, accroissant ainsi la capacité de chargement des véhicules et en conséquence une réduction du coût de transport.

Les plots peuvent être réutilisés après séparation de la plaque inférieure, notamment par chauffage instantané, par exemple dans un tunnel à micro-ondes ou frappe sur chaque plot.

Quant au carton des deux plaques, on connaît ses possibilités de recyclage total comme fibres de cellulose dans les usines de fabrication de pâte à papier.

Si les plots ne sont pas réutilisés pour la fabrication de nouvelles palettes, ils peuvent aussi être recyclés comme les déchets de bois. Avantage supplémentaire, le volume de ces plots par palette est réduit et il s'agit de bois reconstitué lui-même obtenu à partir de déchets et son broyage est aisé.

Les retours 30 de protection présentent un intérêt lors de l'arrimage des produits sur la palette car les sangles ou les liens plus généralement, viennent en pression sur les retours et non sur les produits directement.

Ces retours évitent aussi tout glissement latéral des produits sur la plaque supérieure.

## Revendications

1. Palette de manutention destinée à recevoir des produits comprenant une plaque supérieure (12) réalisée en carton ondulé, rapportée par collage sur une plaque inférieure (14) également réalisée en carton ondulé et des plots (16) réalisés en bois, au moins rapportés en partie sur ladite plaque inférieure (14) et au moins en appui sur la face inférieure de ladite plaque supérieure (12).

2. Palette de manutention selon la revendication 1, **caractérisée en ce que** la plaque inférieure (14) comprend des volets (26), venus de découpe, destinés à être fixés par collage sur les plots (16).

3. Palette de manutention selon la revendication 1 ou 2, **caractérisée en ce qu**'elle comprend trois rangées (20, 22, 24) de logements (32) constitués, pour la rangée centrale d'au moins une paire de deux volets (26) et pour chaque rangée latérale d'au moins un ensemble composé d'un volet (26) et d'un rabat (28), ledit rabat étant venu de découpe des bords de la plaque inférieure (14).

4. Palette de manutention selon l'une quelconque des revendications précédentes, **caractérisée en ce qu'**elle comprend des retours (30) de protection, venus de découpe des bords longitudinaux de la plaque inférieure (14).

5. Palette de manutention selon les revendication 3 et 4, **caractérisée en ce que** les rabats (28) et les retours (30) de protection sont venus de la même découpe des bords longitudinaux de la plaque inférieure (14).

6. Palette selon l'une quelconque des revendications 2 à 5, **caractérisée en ce que** la largeur des volets (26) est inférieure à la hauteur des plots (16).

7. Palette de manutention selon l'une quelconque des revendications précédentes, **caractérisée en ce que** les plots sont en bois reconstitué.

8. Palette de manutention selon l'une quelconque des revendications précédentes, **caractérisée en ce que** les côtés transversaux des plots (16) sont chanfreinés.

9. Palette de manutention selon l'une quelconque des revendications précédentes, **caractérisée en ce que** les colles pour la liaison des deux plaques inférieure (14) et supérieure (12) et pour la liaison des plots sont des colles résistantes à l'eau.

10. Palette de manutention selon l'une quelconque des revendications précédentes, **caractérisée en ce que** le carton est du carton ondulé haute résistance.

## Claims

1. Handling pallet designed to receive products, comprising an upper panel (12) made of corrugated cardboard which is connected by adhesive bonding to a lower panel (14) likewise made of corrugated cardboard, and blocks (16) made of wood which are at least partially connected to said lower panel (14) and at least bear against the lower face of said upper panel (12).

2. Handling pallet according to claim 1, **characterised in that** the lower panel (14) comprises tabs (26) which have been cut out and are designed to be fixed by adhesive bonding to the blocks (16).

3. Handling pallet according to claim 1 or 2, **characterised in that** it comprises three rows (20, 22, 24) of housings (32), the central row consisting of at least one pair of two tabs (26) and each side row consisting of at least one assembly composed of one tab (26) and one flap (28), said flap being cut out of the edges of the lower panel (14).

4. Handling pallet according to any one of the preceding claims, **characterised in that** it comprises protective returns (30) which have been cut out of the longitudinal edges of the lower panel (14).

5. Handling pallet according to claims 3 and 4, **characterised in that** the flaps (28) and the protective returns (30) are formed from the same cut in the longitudinal edges of the lower panel (14).

6. Handling pallet according to any one of claims 2 to 5, **characterised in that** the width of the tabs (26) is smaller than the height of the blocks (16).

7. Handling pallet according to any one of the preceding claims, **characterised in that** the blocks are made from reconstituted wood.

8. Handling pallet according to any one of the preceding claims, **characterised in that** the transverse sides of the blocks (16) are bevelled.

9. Handling pallet according to any one of the preceding claims, **characterised in that** the adhesives for connecting the lower panel (14) and the upper panel (12) and for connecting the blocks are water-resistant adhesives.

10. Handling pallet according to any one of the preceding claims, **characterised in that** the cardboard is high-strength corrugated cardboard.

## Patentansprüche

1. Transportpalette zur Aufnahme von Produkten, umfassend eine aus Wellpappe bestehende obere Platte (12), die auf einer ebenfalls aus Wellpappe bestehenden unteren Platte (14) aufgeklebt ist, und aus Holz bestehende Füße (16), die zumindest teilweise an der unteren Platte (14) angesetzt sind und sich zumindest an der Unterseite der oberen Platte (12) abstützen.

2. Transportpalette nach Anspruch 1, **dadurch gekennzeichnet, dass** die untere Platte (14) ausgeschnittene Laschen (26) umfasst, die an den Füßen (16) durch Kleben zu befestigen sind.

3. Transportpalette nach Anspruch 1 oder 2, **dadurch gekennzeichnet, dass** sie drei Reihen (20, 22, 24) von Aufnahmen (32) umfasst, die in der mittleren Reihe aus mindestens einem Paar von zwei Laschen (26) und in der jeweiligen seitlichen Reihe aus mindestens einer Einheit zusammengesetzt aus einer Lasche (26) und einer Klappe (28) bestehen, wobei die Klappe durch Ausschneiden der Ränder der unteren Platte (14) gebildet ist.

4. Transportpalette nach einem der vorstehenden Ansprüche, **dadurch gekennzeichnet, dass** sie Schutzumschlagklappen (30) umfasst, die in den Längsrändern der unteren Platte (14) ausgeschnitten sind.

5. Transportpalette nach den Ansprüchen 3 und 4, **dadurch gekennzeichnet, dass** die Klappen (28) und die Schutzumschlagklappen (30) durch denselben Ausschnitt in den Längsrändern der unteren Platte (14) gebildet sind.

6. Transportpalette nach einem der Ansprüche 2 bis 5, **dadurch gekennzeichnet, dass** die Breite der Laschen (26) geringer ist als die Höhe der Füße (16).

7. Transportpalette nach einem der vorstehenden Ansprüche, **dadurch gekennzeichnet, dass** die Füße aus einem Pressholz hergestellt sind.

8. Transportpalette nach einem der vorstehenden Ansprüche, **dadurch gekennzeichnet, dass** die Querseiten der Füße (16) abgeschrägt sind.

9. Transportpalette nach einem der vorstehenden Ansprüche, **dadurch gekennzeichnet, dass** die Klebstoffe zur Verbindung der unteren (14) und der oberen (12) Platte und zur Verbindung der Füße wasserfeste Klebstoffe sind.

10. Transportpalette nach einem der vorstehenden Ansprüche, **dadurch gekennzeichnet, dass** die Pappe hoch widerstandsfähige Wellpappe ist.
